(19) Europäisches Patentamt
European Patent Office
Office européen des brevets

(11) EP 1 132 436 B1

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(51) Int Cl.:
***C09D 5/02*** *(2006.01)* ***C04B 41/48*** *(2006.01)*
***C09D 157/04*** *(2006.01)*

(21) Anmeldenummer: **01104957.4**

(22) Anmeldetag: **01.03.2001**

(54) **Wässrige Dispersionsfarbe**

Aqueous dispersion paint

Peinture aqueuse

(84) Benannte Vertragsstaaten:
**DE ES FR IT NL**

(30) Priorität: **10.03.2000 DE 10011643**

(43) Veröffentlichungstag der Anmeldung:
**12.09.2001 Patentblatt 2001/37**

(73) Patentinhaber: **BASF Aktiengesellschaft**
**67056 Ludwigshafen (DE)**

(72) Erfinder:
- **Laubender, Matthias, Dr.**
  **67105 Schifferstadt (DE)**
- **Richter, Frauke, Dr.**
  **67117 Limburgerhof (DE)**
- **Röckel, Harald, Dr.**
  **67435 Neustadt (DE)**
- **Rau, Maria Gyopar, Dr.**
  **67454 Hassloch (DE)**

(56) Entgegenhaltungen:
**EP-A- 0 422 532**
**EP-A- 0 771 847**
**JP-A- 6 073 328**
**JP-A- 54 040 844**
**US-A- 5 118 749**
**US-A- 5 610 225**

EP 1 132 436 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft die Verwendung einer wässrigen Dispersionsfarbe mit einem Pigmentgehalt von 40 bis 200 Gew.-Teilen, bezogen auf 100 Gew.-Teile Polymer zur Beschichtung von Gebäuden oder Gebäudeteilen, dadurch gekennzeichnet, daß es sich bei dem Polymeren um ein Emulsionscopolymerisat handelt, welches zu 3 bis 15 Gew.-% aus Monomeren der Formel I

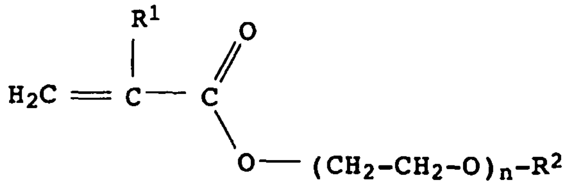

oder II

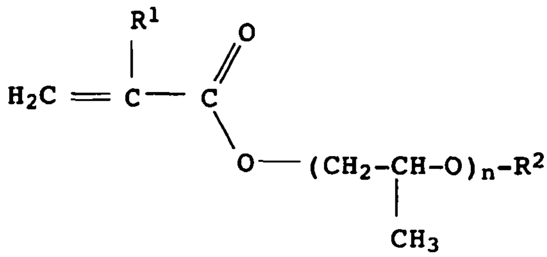

besteht,
worin $R^1$ für ein H Atom oder eine Methylgruppe, $R^2$ für ein H-Atom oder eine aliphatische oder aromatische Kohlenwasserstoffgruppe mit 1 bis 20 C-Atomen und n für eine ganze Zahl von 3 bis 15 steht.

Desweiteren betrifft die Erfindung die Verwendung des obigen Emulsionscopolymerisats als Bindemittel für Dispersionsfarben, insbesondere Hochglanz-Dispersionsfarben.

Aus EP-A-37150 sind wässrige Hochglanz-Dispersionsfarben bekannt, welche als Bindemittel ein Emulsionscopolymerisat auf Basis von Acrylaten, Styrol enthalten. Die Polymerisation erfolgt in Gegenwart eines Emulgatoren mit 60 bis 100 Ethylenoxidgruppen. Der Emulgator kann auch copolymerisierbar sein.

Aus EP-A-389179 sind wässrige Dispersionen von zweistufig aufgebauten Emulsionscopolymerisaten bekannt. An die Copolymerisate, insbesondere an den Kern der Copolymerisatteilchen sind Alkylenoxidketten gebunden. Verwendung finden amphiphile Verbindungen, z.B. langkettige, ungesättigte Alkohole, deren Alkoholgruppe alkoxyliert, insbesondere ethoxyliert ist.

In EP-A-661306 werden Emulsionscopolymerisate für die Beschichtung von Kunststoffoberflächen beschrieben, welche ethoxylierte (Meth)acrylsäureester enthalten. Die erhaltene Beschichtung hat verbesserte anwendungstechnische Eigenschaften, insbesondere eine verbesserte Chemikalienbeständigkeit.

In US-A-5,610,225 werden Dispersionsfarben beschrieben, welche Emulsionspolymerisate als Bindemittel enthalten, die ethoxylierte (Meth)acrylsäureester beinhalten. Die erhaltenen Dispersionsfarben zeigen eine Gefrier-Tau-Stabilität ohne Zugabe flüchtiger Additive.

Für die Verarbeitung von Dispersionsfarben, insbesondere Hochglanzdispersionsfarben ist eine möglichst lange offene Zeit wichtig. Unter "offener Zeit" versteht man die Zeit in der die Dispersionsfarbe noch verarbeitbar bleibt und so nach dem Auftragen auf Substrate Ungleichmäßigkeiten in der Oberfläche der Beschichtung noch ausgebessert werden können. Besondere Bedeutung hat die offene Zeit bei großflächigen Substraten, z.B. in der Bauindustrie. Bei Anstrichen auf Gebäudeteilen, z.B. Innenwände, Holzverkleidungen etc. ist ein gleichmäßiges Erscheinungsbild besonders gewünscht. Dazu muß die Möglichkeit bestehen, möglichst noch nach Fertigstellung der gesamten Fläche oder Teilfläche Ausbesserungen und Anpassungen in der Beschichtung vornehmen zu können.

Aufgabe der vorliegenden Erfindung waren daher Dispersionsfarben, insbesondere Hochglanzdispersionsfarben, mit einer möglichst langen offenen Zeit.

Demgemäß wurde die eingangs definierte Dispersionsfarbe gefunden.

Die erfindungsgemäß verwendete wässrige Dispersionsfarbe enthält als wesentliche Bestandteile ein Polymer

als Bindemittel und ein Pigment.

Bei dem Polymer handelt es sich um ein Emulsionscopolymerisat, welches zu 3 bis 15 Gew.-% aus Monomeren der Formel I oder II besteht.

Bei den Alkylenoxideinheiten handelt es sich um Ethylenoxid-, Propylenoxideinheiten oder Mischungen von Ethylenoxid- und Propylenoxideinheiten. Ethylenoxideinheiten und Propylenoxideinheiten können z.B. alternieren oder in Form von Polyethylenoxid- bzw. Polypropylenoxidblöcken vorliegen.

Die Polyalkylenoxidgruppe besteht zumindest aus 3 und besonders bevorzugt aus mindestens 4 Alkylenoxidgruppen. Besonders bevorzugt steht n für eine ganze Zahl von 4 bis 12.

Der Rest $R^2$ steht vorzugsweise für ein H-Atom oder eine Kohlenwasserstoffgruppe mit 1 bis 10 C-Atomen, besonders bevorzugt steht $R^2$ für eine $C_1$- bis $C_8$-, insbesondere eine $C_1$- bis $C_4$-Alkylgruppe oder ein H-Atom.

Bevorzugt besteht das Emulsionscopolymerisat aus

a) 60 bis 97 Gew.-% Hauptmonomere,

b) 3 bis 15 Gew.-% Monomere der Formel I oder II und

c) 0 bis 30 Gew.-% weitere Monomere.

Die Hauptmonomere sind ausgewählt aus $C_1$- bis $C_{18}$-Alkyl(meth)acrylate, vinylaromatischen Verbindungen mit bis zu 20 C-Atomen, Vinylester von Carbonsäuren mit 1 bis 20 C-Atomen, Vinylhalogenide, Vinylether, ethylenisch ungesättigte Nitrile, nicht aromatischen Kohlenwasserstoffen mit 2 bis 8 C-Atomen und 1 oder 2 Doppelbindungen.

Als Hauptmonomere zu nennen sind z.B. $C_1$-$C_8$-Alkyl(meth)acrylate wie Methylmethacrylat, Methylacrylat, n-Butylacrylat, Ethylacrylat und 2-Ethylhexylacrylat.

Insbesondere sind auch Mischungen der Alkyl(meth)acrylate geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren genannt; solche mit einer Doppelbindung sind z.B. Ethen oder Propen.

Bevorzugte Hauptmonomere sind die Alkyl(meth)acrylate, insbesonders die $C_1$-$C_8$-Alkyl(meth)acrylate, vinylaromatische Verbindungen mit bis zu 20 C-Atomen, insbesondere Styrol und Mischungen der vorstehenden Monomeren.

Weitere Monomere sind z.B. Hydroxylgruppen enthaltende Monomere, insbesondere $C_1$-$C_{10}$-Hydroxyalkyl (meth)acrylate, (Meth)acrylamid, ethylenisch ungesättigte Säuren, insbesondere Carbonsäuren, wie (Meth)acrylsäure oder Itaconsäure, und deren Anhydride, Dicarbonsäuren und deren Anhydride oder Halbester, z.B. Maleinsäure, Fumarsäure und Maleinsäureanhydrid.

Das Emulsionscopolymerisat hat vorzugsweise eine Glasübergangstemperatur Tg kleiner 30°C, besonders bevorzugt kleiner 25°C.

Insbesondere beträgt die Tg z.B. -20 bis +20°C, besonders bevorzugt 0 bis 20° und ganz besonders bevorzugt 10 bis 20°C.

Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Nach Fox (siehe Ullmanns Enzyklopädie der technischen Chemie, 4. Auflage, Band 19, Weinheim (1980), S. 17, 18) kann man die Glasübergangstemperatur $T_G$ abschätzen. Es gilt für die Glasübergangstemperatur von schwach bzw. unvernetzten Mischpolymerisaten bei großen Molmassen in guter Näherung:

$$\frac{1}{T_g} = \frac{X^1}{T_g{}^1} + \frac{X^2}{T_g{}^2} + \cdots\cdots \frac{X^n}{T_g{}^n}$$

wobei $X^1$, $X^2$, ..., $X^n$ die Massenbrüche 1, 2, ..., n und $T_g^1$, $T_g^2$, ..., $T_g^n$ die Glasübergangstemperature der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

Die Herstellung des Emulsionscopolymerisats kann in bekannter Weise durch Emulsionspolymerisation erfolgen.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; $C_8$- bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$- bis $C_{18}$), von Alkylarylsulfonsäuren (Alkylrest: $C_9$- bis $C_{18}$) und von Sulfaten ethoxylierter Fettalkohole.

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,2 bis 5 Gew.-%, bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 150, vorzugsweise 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das

Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren kann auch nach Ende der eigentlichen Emulsionspolymerisation, d.h. nach einem Umsatz der Monomeren von mindestens 95 %, Initiator zugesetzt werden.

Es wird eine wässrige Polymerdispersion erhalten, welche üblicherweise einen Polymergehalt (Festgehalt) von 20 bis 70 Gew.-%, vorzugsweise 40 bis 60 Gew.-%, bezogen auf die Polymerdispersion aufweist.

Das Polymer bzw. Emulsionscopolymerisat dient in der Dispersionsfarbe als Bindemittel.

Die Dispersionsfarbe enthält weiterhin ein Pigment. Als Pigment werden zusammenfassend alle Pigmente und Füllstoffe, z.B. Farbpigmente, Weißpigmente und anorganische Füllstoffe bezeichnet.

Genannt seien anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe sind z.B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Dispersionsputze können auch gröbere Zuschläge, wie Sände oder Sandsteingranulate, enthalten. In Dispersionsfarben werden naturgemäß feinteilige Füllstoffe bevorzugt. Die erfindungsgemäßen Dispersionsfarben können zur Modifizierung des Oberflächenglanzes und Farbeindrucks des Farbanstrichs auch teilchenförmige, nichtfilmbildende Polymere, z.B. Polystyrol-Dispersionen, enthalten.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Der Pigmentgehalt beträgt 40 bis 200 Gew.-Teile Pigment auf 100 Gew.-Teile Polymer. Vorzugsweise liegt der Pigmentgehalt bei 45 bis 160 Gew.-Teilen, besonders bevorzugt bei 55 bis 130 Gew.-Teilen Pigment auf 100 Gew.-Teile Polymer.

Die erfindungsgemäße wässrige Dispersionsfarbe kann neben dem Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze.

Genannt seien weiter Verlaufsmittel, Entschäumer, Biozide und Verdicker.

Als Verdicker in Betracht kommen z.B. Assoziativverdicker.

Bevorzugte Assoziativverdicker sind Polyurethanverdicker.

Die Menge des Verdickers beträgt vorzugsweise 0,5 bis 5 Gew.-Teile, besonders bevorzugt 0,5 bis 2,5 Gew.-Teile auf 100 Gew.-Teile Polymer.

Die Herstellung der erfindungsgemäßen Dispersionsfarbe erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d.h. in der Regel die wässrige Dispersion des Polymeren mit der Pigmentpaste bzw. Pigmentdispersion zu vermischen.

Die erfindungsgemäßen Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment, Emulgatoren und Verdicker. Bei den flüchtigen Bestandteilen handelt es sich vorwiegend um Wasser.

Vorzugsweise handelt es sich bei der Dispersionsfarbe um eine Hochglanzdispersionsfarbe.

Die Bestimmung des Glanzes der Dispersionsfarbe erfolgt nach DIN 67530: Das Anstrichmittel wird mit 240 $\mu$m Schichtdicke (naß) auf die Prüffolie aufgetragen und 72 Stunden lang bei Raumtemperatur getrocknet. Der Prüfkörper wird in ein kalibriertes Reflektometer eingesetzt, und bei definiertem Einfall-Winkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Der Glanz der Hochglanzdispersionsfarbe ist vorzugsweise größer 40 bei 20° und größer 70 bei 60°, besonders bevorzugt ist der Glanz größer 50 bei 20° und größer 80 bei 60°.

Der Reflektometerwert wird bestimmt bei 21°C und dimensionslos angegeben in Abhängigkeit vom Einfallswinkel, z.B. 40 bei 20°.

Die Dispersionsfarbe kann in üblicher Weise auf Substrate aufgebracht werden, z.B. durch Streichen, Rollen, Rakeln etc.

Erfindungsgemäß wird die Dispersionsfarbe zum Beschichten von Gebäuden oder Gebäudeteilen verwendet. Es kann sich dabei um mineralische Untergründe wie Putze oder Beton, um Holz, Metall oder Papier, z.B. Tapeten handeln.

Vorzugsweise handelt es sich bei den zu beschichtenden Teilen um großflächige Teile mit einer zu beschichtenden Fläche von mindestens 1, insbesondere mindestens 2 $m^2$.

Vorzugsweise findet die Dispersionsfarbe für Gebäudeinnenteile, z.B. Innenwände, Innentüren, Vertäfelungen, Treppengeländer etc. Verwendung.

Die Dispersionsfarben haben gute anwendungstechnische Eigenschaften, z.B. eine gute Wasserfestigkeit, gute Naßhaftung, insbesondere auch auf Alkydfarben, gute Blockfestigkeit, eine gute Überstreichbarkeit und sie zeigen beim Auftragen einen guten Verlauf.

Insbesondere haben die Dispersionsfarben eine lange offene Zeit.

Beispiele

I Herstellung der Polymerdispersion

Die Herstellung erfolgte gemäß nachstehender allgemeiner Herstellungsvorschrift:

In einem Polymerisationsgefäß wurde ein Gemisch aus

| | |
|---|---|
| 200 g | Wasser |
| 33,8 g | einer 33 gew.-% Lösung einer Polystyrolsaat (mittlere Teilchengröße 30 nm) |

vorgelegt und unter Rühren auf 85°C erhitzt. Anschließend wurde unter Aufrechterhalten der 85°C Zulauf 1 innerhalb von 3 h zugefahren, wobei die ersten 20 Min. bei halber Zulaufgeschwindigkeit erfolgten, und die Restmenge an Zulauf 2 (zeitgleichbeginnend mit Zulauf 1) innerhalb 3 h 15 Min. zugefahren wurde. Nach Beendigung des Zulaufs 2 wurde dem Polymerisationsgemisch Zulauf 3 zugegeben und anschließend wurde 30 Min. bei 85°C nachpolymerisiert. Danach wurde auf 70°C gekühlt und zur Reduzierung der Restmonomeren Zulauf 4 zugefahren sowie Zulauf 5 in 30 Min. kontinuierlich zugegeben. Anschließend wurde abgekühlt.

Zulauf 1:

| | |
|---|---|
| 243 g | Wasser |
| 11,3 g | einer 20 gew.-%igen Lösung von ethoxyliertem Fettalkohol (Alkylrest: $C_{16}/C_{18}$-Gemisch, mittlerer EO-Grad: 18) |
| 60 g | einer 15 gew.-%igen wäßrigen Lösung von Natriumlaurylsulfat |
| 9 g | Methacrylsäure |
| X | Methylmethacrylat (MMA) |
| Y g | n-Butylacrylat (BA) |
| Z g | Methylverschlossenes Polyethylenglycolmethacrylat (60/100 gew.-%ige Lösung) (Bisomer®MPEG) |

Zulauf 2:

| | |
|---|---|
| 34 g | Wasser |
| 1,8 g | Natriumperoxodisulfat |

Zulauf 3:

| | |
|---|---|
| 3,2 g | 25 gew.-%ige wäßrige Ammoniaklösung |

Zulauf 4:

| | |
|---|---|
| 1 g | 70 gew.-%ige t-Butylhydroperoxidlösung |
| 3,5 g | Wasser |

Zulauf 5:

| | |
|---|---|
| 8,9 g | 13,1 gew.-%ige Acetonbisulfitlösung |
| 9 g | Wasser |

Die Angaben zur Menge an MMA, BA und MPEG in den Zuläufen sind der Tabelle zu entnehmen:

| Beispiel | MMA | BA | MPEG | mittlerer Ethoxylierungsgrad des MPEG | MPEG im Polymer* |
|---|---|---|---|---|---|
| B 1 | 189 g | 252 g | - | - | - |
| B 2 | 189 g | 234 g | 18 g (100 %ig) | 7-8 | 4 % Bisomer MPEG 350 MA |
| B 3 | 189 g | 229,5 g | 22,5 (100 %ig) | 7-8 | 5 % Bisomer MPEG 350 MA |
| B 4 | 189 g | 220,5 g | 31,5 (100 %ig) | 7-8 | 7 % Bisomer MPEG 350 MA |
| VB 5 | 184,5 g | 245 g | 11 g (100 %ig) | 7-8 | 2,5 % Bisomer MPEG 350 MA |
| VB 6 | 184,5 g | 245 g | 18,5 g (60 %ig) | 22-23 | 2,5 % Bisomer S 10 W |
| VB 7 | 184,5 g | 245 g | 18,5 g (60 %ig) | 45 | 2,5 % Bisomer S 20 W |
| * in Gew.-% VB = Vergleichsbeispiel | | | | | |

Bei den verwendeten methylverschlossenen Polyethylenglycolmethacrylaten handelt es sich um Produkte der Firma Inspec Specialities (Bisomere®), die gemäß der vorstehenden Tabelle verwendeten Bisomere unterscheiden sich nur im Ethoxylierungsgrad.

II Herstellung von Hochglanzfarben

Aus den wäßrigen Polymerisatdispersionen B1 bis B4 und VB5 bis VB7 wurden Hochglanzfarben formuliert. Dazu wurden zunächst Pigmentpasten wie im Folgenden beschrieben hergestellt und anschließend mit dem Bindemittel abgemischt (Rezepturen F1 - F3). Die Zusammensetzung ist in der nachstehenden Tabelle angegeben:

| | F1 | F2 | F3 |
|---|---|---|---|
| Wasser | 34,8 | 20 | 20 |
| Surfinol 104/50% [1] | 2,8 | - | - |
| Tegowet 250 [2] | 1,8 | - | - |

(fortgesetzt)

| | F1 | F2 | F3 |
|---|---|---|---|
| Agitan E 255 [3] | - | 1,5 | 1 |
| Strodex MOK 70 [4] | 1,5 | - | - |
| Collacral LR 8954/30 % [5] | 15 | - | - |
| Pigmentverteiler MD 20/25 % [6] | - | 10 | 10 |
| Rheolate 208/5 % [7] | - | - | 120 |
| Fettalkoholethoxylaturethan | 7,8 * | 120 ** | - |
| Kronos Titan 2063 S | 152,5 | 230 | 230 |
| Byk 306 [8] | 2,1 | - | - |
| Wasser | - | 88,5 | 88,5 |
| Dispersion 45 % | 530 | 530 | 530 |

* 20%ige Lösung;
** 5%ige Lösung
1 Entschäumer der Firma Air Products
2 Netzmittel der Firma Tego Chemie Service GmbH
3 Entschäumer der Firma Münzing Chemie GmbH
4 Dispergiermittel der Firma Dexter Chemical Corp. USA
5 Pigmentdispergiermittel der BASF
6 Natriumsalz eines Copolymeren aus Maleinsäureanhydrid und Diisobuten (BASF)
7 Assoziativverdicker der Firma Rheox GmbH
8 Entschäumer der Firma Byk-Chemie GmbH

III Anwendungstechnische Prüfung

Bestimmung der offenen Zeit:

Die Bestimmung der offenen Zeit erfolgte mit der Rakelmethode. Dazu wird die Farbe mit 240 μm Naßschichtdicke auf eine Leneta-Folie appliziert und nach def. Zeitabständen während der Trocknung des Filmes mit einer 200 μm Metall-Spirale bis zum Untergrund gestört. Nach vollständiger Trocknung wird die Qualität der Filmoberfläche beurteilt und es werden zwei Zeitpunkte festgehalten. Der erste Wert ist die Zeit, nach welcher keine Spiralspuren zu erkennen sind. Der zweite Wert ist die Zeit, nach welcher die Rakelrillen deutlich zu erkennen sind. Die Rakelmethode ist somit über den Verlauf definiert.

Durchführung von Glanzmessungen:

Auf einer Glasplatte wurden Naßschichtdicken der formulierten Farben von 240 μm aufgebracht. Nach 24 h Verfilmung bei 23°C wurde der Glanzgrad der Verfilmung bei 20° und 60° Winkel-Beobachtung mit einem Micro-TRI-Gloss-Reflektometer der Firma Byk-Gardner an 3 aus der Filmfläche willkürlich herausgegriffenen Meßpunkten bestimmt. Angegeben ist der Mittelwert aus 3 Bestimmungen.

Durchführung der Viskositätsmessungen:

Die Messung der Fließkurven erfolgte mit einem Physika DSR 4000/5000 MK 22-Rheometer in einem Scherbereich von 0 - 10.000 1/s. In der Tabelle sind die Werte für 102 1/s in [mPas] angegeben.

Ergebnisse:

| Beispiel | F1 offene Zeit [min] | F2 offene Zeit [min] | F1 Viskosität 102 1/s [mPas] | F2 Viskosität 102 1/s [mPas] | F1 Glanz 20°/60° | F2 Glanz 20°/60° |
|---|---|---|---|---|---|---|
| B 1 | 24/26 | 19/21 | 481 | 928 | 67/86 | 29/69 |
| B 2 | 34/36 | 28/33 | 86 | 576 | 68/85 | 37/73 |
| B 3 | 33/36 | 27/29 | 87 | 618 | 68/85 | 42/76 |
| B 4 | 34/36 | 28/33 | 95 | 915 | 67/86 | 50/78 |

Aus den Viskositäten bei B1 und B4 im Falle der Formulierung F2 geht hervor, daß die Verlängerung der offenen Zeit nicht auf den Effekt der Viskosität zurückzuführen ist, sondern eindeutig ein Effekt der zugesetzten methylverschlossenen Polyethylenglycolmethacrylate ist. Die offene Zeit beträgt 33-34 Minuten bzw. 27-28 Minuten gegenüber der Nullprobe mit 24 bzw. 19 Minuten in Abhängigkeit von der Formulierung.

Des Weiteren zeigt sich, daß der Effekt der Verlängerung der offenen Zeit von der Kettenlänge der EO-Einheiten abhängt und mit steigender Kettenlänge abnimmt. Der Glanz ändert sich dagegen unwesentlich.

| Beispiel | F 3 offene Zeit [min] | F 3 Glanz 20°/60° |
|---|---|---|
| B 5 | 9/12 | 61/84 |
| B 6 | 6/10 | 64/85 |
| B 7 | 0/2 | 62/83 |

**Patentansprüche**

1. Verwendung einer wässrigen Dispersionsfarbe mit einem Pigmentgehalt von 40 bis 200 Gew.-Teilen, bezogen auf 100 Gew.-Teile Polymer zur Beschichtung von Gebäuden oder Gebäudeteilen, **dadurch gekennzeichnet, daß** es sich bei dem Polymeren um ein Emulsionscopolymerisat handelt, welches zu
3 bis 15 Gew.-% aus Monomeren der Formel I

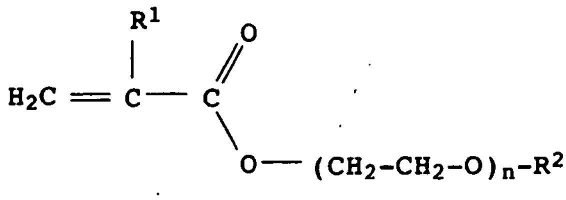

oder II

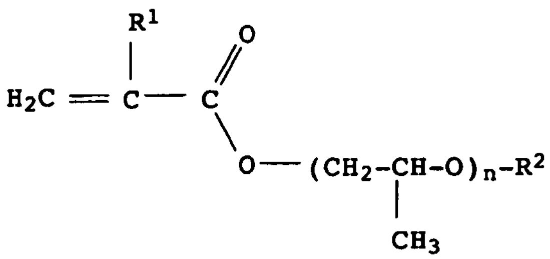

besteht,
worin $R^1$ für ein H Atom oder eine Methylgruppe, $R^2$ für ein H-Atom oder eine aliphatische oder aromatische Kohlenwasserstoffgruppe mit 1 bis 20 C-Atomen und n für eine ganze Zahl von 3 bis 15 steht.

2. Verwendung gemäß Anspruch 1, **dadurch gekennzeichnet, daß** es sich bei den Alkylenoxideinheiten um Ethylenoxid-, Propylenoxid- oder Mischungen von Ethylenoxid- und Propylenoxideinheiten handelt.

3. Verwendung gemäß Anspruch 1 oder 2, **dadurch gekennzeichnet, daß** $R^2$ für eine $C_1$- bis $C_4$-Alkylgruppe steht.

4. Verwendung gemäß einem der Ansprüche 1 bis 3, **dadurch gekennzeichnet, daß** die Glasübergangstemperatur des Emulsionscopolymerisats kleiner 30°C ist.

5. Verwendung gemäß einem der Ansprüche 1 bis 4, **dadurch gekennzeichnet, daß** die Dispersionsfarbe einen Verdicker, ausgewählt aus der Klasse der Assoziativverdicker enthält.

6. Verwendung einer wässrigen Dispersionsfarbe gemäß einem der Ansprüche 1 bis 5, **dadurch gekennzeichnet, daß** es sich um eine Hochglanz-Dispersionsfarbe mit einem Glanz größer 40 bei 20° und größer 70 bei 60° (° ist Einfallswinkel) handelt.

7. Verwendung der wässrigen Dispersionsfarbe gemäß einem der Ansprüche 1 bis 6 zur Beschichtung von Untergründen aus Holz, Metall, von mineralischen Untergründen oder Tapeten.

8. Verwendung der wässrigen Dispersionsfarbe gemäß einem der Ansprüche 1 bis 7 für Hausinnenwände oder Gebäudeinnenteile, zum Beispiel Holzbalken oder Vertäfelungen.

9. Wässrige Dispersionsfarbe, enthaltend ein Emulsionscopolymerisat und ein Pigment, wobei das Emulsionscopolymerisat eine Glasübergangstemperatur kleiner 30°C hat und aufgebaut ist aus

a) 40 bis 99,5 Gew.-% eines $C_1$- bis $C_8$-Alkyl(meth)acrylats, einer vinylaromatischen Verbindung oder deren Mischungen
b) 3 bis 15 Gew.-% eines Monomeren der Formel I

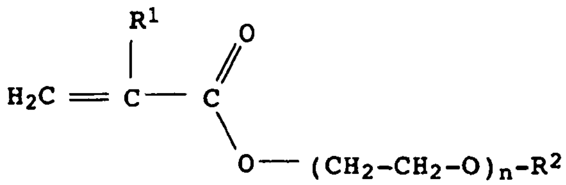

oder II

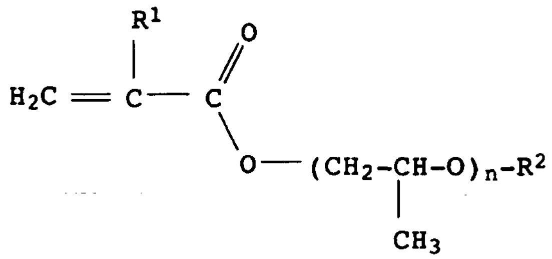

worin $R^1$ für ein H Atom oder eine Methylgruppe, $R^2$ für ein H-Atom oder eine aliphatische oder aromatische Kohlenwasserstoffgruppe mit 1 bis 20 C-Atomen und n für eine ganze Zahl von 3 bis 15 steht und
c) 0 bis 50 Gew.-% eines weiteren Monomeren,

und die Dispersionsfarbe 40 bis 200 Gew.-Teile Pigment auf 100 Gew.-Teile des Emulsionscopolymerisats enthält.

**10.** Wässrige Dispersionsfarbe gemäß Anspruch 9, enthaltend zusätzlich einen Verdicker, ausgewählt aus der Klasse der Assoziativverdicker.

## Claims

**1.** The use of an aqueous emulsion paint having a pigment content of from 40 to 200 parts by weight per 100 parts by weight of polymer to coat buildings or building parts, wherein said polymer comprises an emulsion copolymer containing
from 3 to 15% by weight of monomers of the formula I

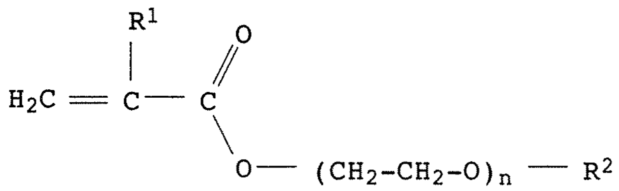

or II

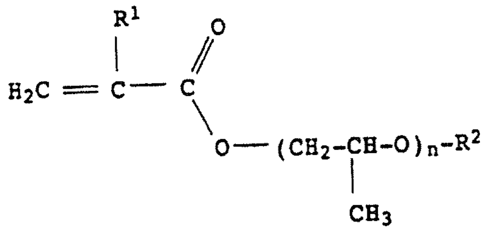

where $R^1$ is a hydrogen atom or a methyl group, $R^2$ is a hydrogen atom or an aliphatic or aromatic hydrocarbon group having 1 to 20 carbon atoms, and n is an integer from 3 to 15.

**2.** The use according to claim 1, wherein the alkylene oxide units comprise ethylene oxide units, propylene oxide units, or mixtures of ethylene oxide and propylene oxide units.

**3.** The use according to claim 1 or 2, wherein $R^2$ is a $C_1$ to $C_4$ alkyl group.

**4.** The use according to one of claims 1 to 3, wherein the glass transition temperature of the emulsion copolymer is less than 30°C.

**5.** The use according to one of claims 1 to 4, wherein the emulsion paint comprises a thickener selected from the class of associative thickeners.

**6.** The use of an aqueous emulsion paint according to one of claims 1 to 5, wherein said paint is a high gloss emulsion paint having a gloss of more than 40 at 20° and more than 70 at 60° (° is angle of incidence).

**7.** The use of the aqueous emulsion paint according to one of claims 1 to 6 to coat substrates of wood, metal, mineral substrates, or wallpapers.

**8.** The use of the aqueous emulsion paint according to one of claims 1 to 7 for internal walls of houses or internal building parts, such as wooden beams or paneling.

**9.** An aqueous emulsion paint comprising an emulsion copolymer and a pigment, said copolymer having a glass transition temperature of less than 30°C and being composed of

a) from 40 to 99.5% by weight of a $C_1$ to $C_8$ alkyl (meth)acrylate, of a vinylaromatic compound, or of mixtures thereof,
b) from 3 to 15% by weight of a monomer of the formula I

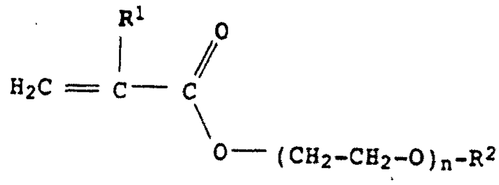

or II

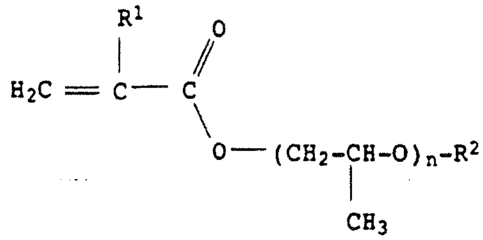

where $R^1$ is a hydrogen atom or a methyl group, $R^2$ is a hydrogen atom or an aliphatic or aromatic hydrocarbon group having 1 to 20 carbon atoms and n is an integer from 3 to 15, and
c) from 0 to 50% by weight of a further monomer,

and said paint comprising from 40 to 200 parts by weight of pigment per 100 parts by weight of said copolymer.

**10.** The aqueous emulsion paint according to claim 9, further comprising a thickener selected from the class of associative thickeners.

## Revendications

**1.** Utilisation d'une peinture à dispersion aqueuse d'une teneur en pigment de 40 à 200 parties en poids, par rapport à 100 parties en poids de polymère, pour le revêtement de bâtiments ou de parties de bâtiments, **caractérisée en ce que** le polymère est un copolymère en émulsion qui consiste en
3 à 15% en poids de monomères de la formule I

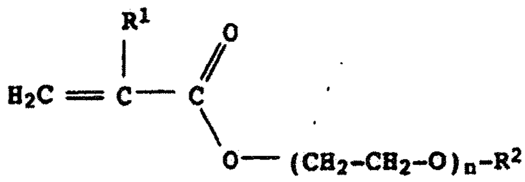

ou II

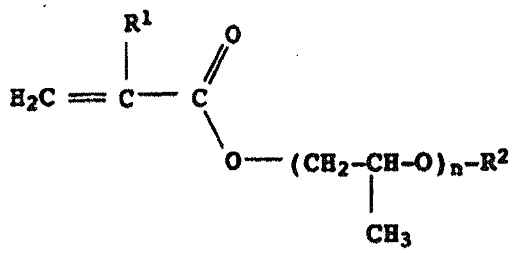

dans lesquelles $R^1$ représente un atome de H ou un groupe méthyle, $R^2$ un atome de H ou un groupe hydrocarboné aliphatique ou aromatique comportant de 1 à 20 atomes de C et n un nombre entier de 3 à 15.

2. Utilisation selon la revendication 1, **caractérisée en ce que** les unités d'oxyde d'alkylène sont des unités d'oxyde d'éthylène, d'oxyde de propylène ou des mélanges d'unités d'oxyde d'éthylène et d'oxyde de propylène.

3. Utilisation selon la revendication 1 ou 2, **caractérisée en ce que** $R^2$ représente un groupe alkyle en $C_1$ à $C_4$.

4. Utilisation selon l'une quelconque des revendications 1 à 3, **caractérisée en ce que** la température de transition vitreuse du copolymère en émulsion est inférieure à 30°C.

5. Utilisation selon l'une quelconque des revendications 1 à 4, **caractérisée en ce que** la peinture à dispersion contient un épaississant, choisi dans la classe des épaississants associatifs.

6. Utilisation d'une peinture à dispersion aqueuse selon l'une quelconque des revendications 1 à 5, **caractérisée en ce qu'**il s'agit d'une peinture à dispersion à haut brillant, d'un brillant de plus de 40 à 20° et de plus de 70 à 60° (° désignant l'angle d'incidence).

7. Utilisation de la peinture à dispersion aqueuse selon l'une quelconque des revendications 1 à 6 pour le revêtement de supports en bois, en métal, de supports minéraux ou de papiers peints.

8. Utilisation de la peinture à dispersion aqueuse selon l'une quelconque des revendications 1 à 7 pour des cloisons intérieures d'habitations ou des parties intérieures de bâtiments, par exemple des poutres de bois ou des lambrissages.

9. Peinture à dispersion aqueuse contenant un copolymère en émulsion et un pigment, le copolymère en émulsion ayant une température de transition vitreuse de moins de 30°C et étant composé de

a) 40 à 99,5% en poids d'un (méth)acrylate d'alkyle en $C_1$ à $C_8$, d'un composé vinylaromatique ou de leurs mélanges,
b) 3 à 15% en poids d'un monomère de la formule I

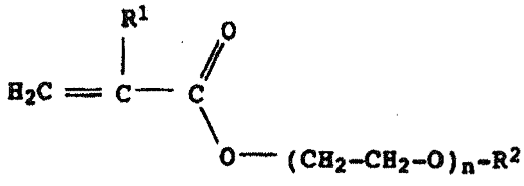

ou II

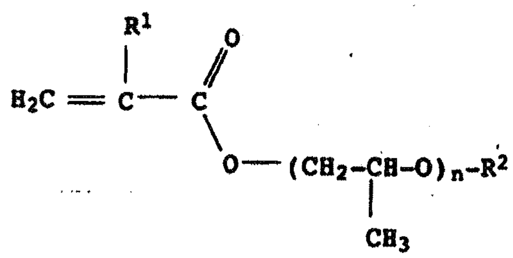

où $R^1$ représente un atome de H ou un groupe méthyle, $R^2$ un atome de H ou un groupe hydrocarboné aliphatique ou aromatique comportant de 1 à 20 atomes de C et n un nombre entier de 3 à 15 et
c) 0 à 50% en poids d'un autre monomère,

et la peinture à dispersion contenant de 40 à 200 parties en poids de pigment pour 100 parties en poids du copolymère en émulsion.

**10.** Peinture à dispersion aqueuse selon la revendication 9, contenant en outre un épaississant, choisi dans la classe des épaississants associatifs.